Europäisches Patentamt

European Patent Office

Office européen des brevets

(11) Publication number: **0 329 898**
**A2**

(12) **EUROPEAN PATENT APPLICATION**

(21) Application number: **88311701.2**

(22) Date of filing: **09.12.88**

(51) Int. Cl.⁴: **C03B 37/027**

(30) Priority: **24.02.88 JP 39686/88**

(43) Date of publication of application:
**30.08.89 Bulletin 89/35**

(84) Designated Contracting States:
**ES GB**

(71) Applicant: **SUMITOMO ELECTRIC INDUSTRIES LIMITED**
**No. 15, Kitahama 5-chome Higashi-ku Osaka-shi Osaka 541(JP)**

(72) Inventor: **Yoshimura, Ichiro c/o Yokohama Works of**
**Sumitomo Electric Industries, Ltd. 1, Taya-cho**
**Sakae-ku Yokohama-shi Kanagawa(JP)**
Inventor: **Takimoto, Hiroaki c/o Yokohama Works of**
**Sumitomo Electric Industries, Ltd. 1, Taya-cho**
**Sakae-ku Yokohama-shi Kanagawa(JP)**
Inventor: **Ito, Shigeru c/o Yokohama Works of**
**Sumitomo Electric Industries, Ltd. 1, Taya-cho**
**Sakae-ku Yokohama-shi Kanagawa(JP)**

(74) Representative: **Calderbank, Thomas Roger et al**
**MEWBURN ELLIS 2 Cursitor Street**
**London EC4A 1BQ(GB)**

(54) **Fiber drawing furnace.**

(57) A fiber drawing furnace (K1-K4) in which a rodlike preform (10) is drawn into an optical fiber (11) while being softened through its heating in atmosphere of inert gas (12) introduced into a furnace body (1) from an upper portion of the furnace body (1) and a shutter (40-43) formed with an outlet (40a-43a) for the optical fiber (11) is provided at a lower opening (1b) of the furnace body (1), with an opening (40b, 50, 42b, 43b) for discharging gas out of the furnace body (1) being formed in the shutter (40-43).

*Fig. 2*

# FIBER DRAWING FURNACE

The present invention generally relates to optical fibers and more particularly, to a fiber drawing furnace for drawing a preform into an optical fiber.

Generally, in order to manufacture optical fibers, a rodlike preform is softened through heating thereof in a furnace so as to be drawn into an optical fiber. Conventionally, in the fiber drawing furnaces used for manufacture of optical fibers, it has been usually so arranged that the preform is inserted into a furnace body from an upper opening such that the optical fiber is discharged downwardly out of the furnace body. In the known fiber drawing furnaces, inert gas or nitrogen is filled in the furnace body and a shutter for maintaining atmosphere of the inert gas in the furnace body is provided at the lower opening.

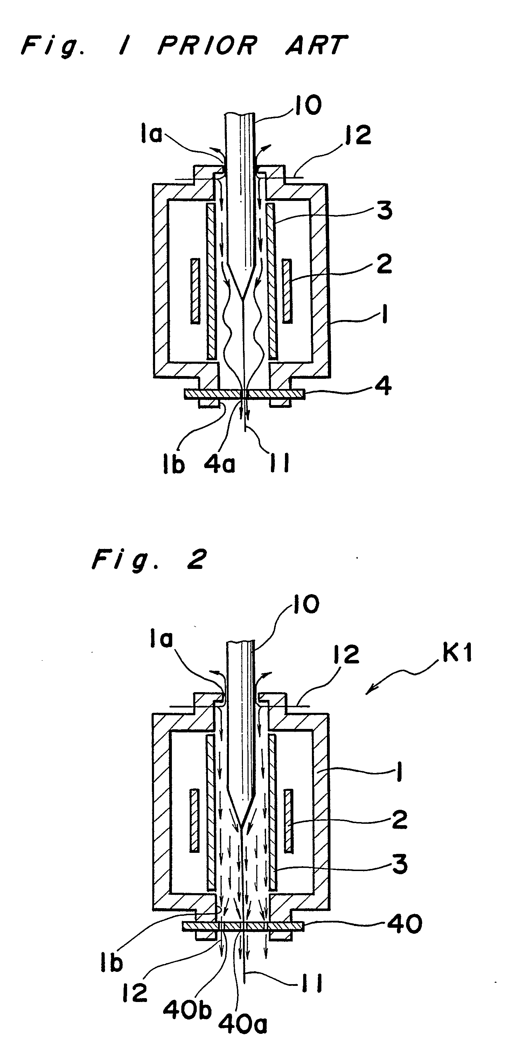

One example of the known fiber drawing furnaces is shown in Fig. 1. This known fiber drawing furnace includes a furnace body 1 in which a heater 2 and a muffle 3 are provided. The furnace body 1 has an upper opening 1a and a lower opening 1b. A preform 10 is inserted into the furnace body 1 from the upper opening 1a and then, is drawn into an optical fiber 11 such that the drawn optical fiber 11 is discharged from the lower opening 1b. Since inert gas is filled in the muffle 3, a shutter 4 formed, at its central portion, with an outlet 4a for the optical fiber 11 is provided at the lower opening 1b.

In the known fiber drawing furnace of Fig. 1, if inert gas 12 is introduced into the furnace body 1 from an upper portion of the furnace body 1, the inert gas 12 is released outwardly from the outlet 4a of the shutter 4 in relatively high-speed turbulent flow as shown by the arrows of Fig. 1. Meanwhile, an interior of the muffle 3 is of high temperature of about 2000 °C and the muffle 3 is made of carbon (C). Thus, in the vicinity of an inner periphery of the muffle 3, carbon (C) of the muffle 3 reacts with silicon (Si) in the preform 10 so as to produce silicon carbide (SiC). Furthermore, in the case where nitrogen gas is employed as the inert gas 12, such substances as silicon nitride ($Si_3N_4$) are also produced. These substances such as SiC, $Si_3N_4$, etc. are suspended, as fine particles, in the muffle 3 and therefore, flow outwardly from the outlet 4a of the shutter 4 together with the inert gas 12. Hence, the known fiber drawing furnace has such a drawback that at the time when the optical fiber 11 passes through the outlet 4a of the shutter 4, the fine particles of SiC, $Si_3N_4$, etc. adhere to the optical fiber 11 so as to damage the optical fiber 11, thereby resulting in reduction of strength of the optical fiber 11. It should be noted that the present invention is not limited to the muffle 3 made of carbon (C) but can also be applied to the muffle 3 made of, for example, zirconia ($ZrO_2$) or alumina ($Al_2O_3$), in which case silica ($SiO_2$) particles or other products pose a similar problem.

Accordingly, an essential object of the present invention is to provid a fiber drawing furnace in which fine particles of silicon carbide (SiC), etc. produced in the vicinity of an inner periphery of a muffle, etc. are prevented from adhering to an optical fiber.

In order to accomplish this object of the present invention, there is provided a fiber drawing furnace embodying the present invention in which a rodlike preform is drawn into an optical fiber while being softened through heating thereof in atmosphere of inert gas introduced into a furnace body from an upper portion of the furnace body and the furnace body has a lower opening such that a shutter formed with an outlet for the optical fiber is provided at the lower opening, the improvement comprising: an opening for discharging gas out of the furnace body, which is formed in the shutter.

By the above described arrangement of the fiber drawing furnace of the present invention, the inert gas introduced into the vicinity of the inner periphery of the muffle flows along the inner periphery of the muffle so as to be discharged out of the furnace body from the opening formed in the shutter. Therefore, in the fiber drawing furnace of the present invention, high-speed turbulent flow of the inert gas is not produced at the outlet for the optical fiber and especially, fine particles produced in the vicinity of the inner periphery of the muffle are effectively discharged out of the furnace body from the opening of the shutter.

This object and features of the present invention will become apparent from the following description taken in conjunction with the preferred embodiments thereof with reference to the accompanying drawings, in which:

Fig. 1 is a sectional view of a prior art fiber drawing furnace (already referred to);

Fig. 2 is a sectional view of a fiber drawing furnace according to a first embodiment of the present invention;

Fig. 3 is a top plan view of a shutter employed in the fiber drawing furnace of Fig. 2;

Fig. 4 is a top plan view of a shutter employed in a fiber drawing furnace according to a second embodiment of the present invention; and

Figs. 5 and 6 are views similar to Fig. 2, particularly showing third and fourth embodiments of the present invention, respectively.

Before the description of the present invention proceeds, it is to be noted that like parts are designated by like reference numerals throughout several views of the accompanying drawings.

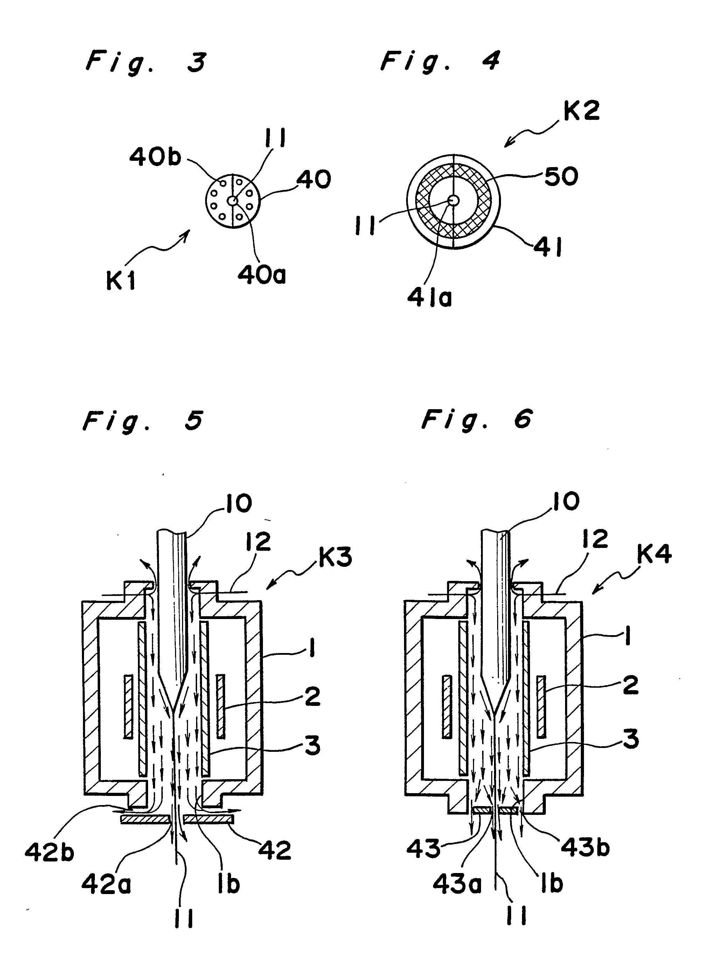

Referring now to the drawings, there is shown in Figs. 2 and 3, a fiber drawing furnace K1 according to a first embodiment of the present invention. The fiber drawing furnace K1 includes a furnace body 1 having an upper opening 1a and a lower opening 1b, a heater 2 and a muffle 3. The fiber drawing furnace K1 further includes a disklike shutter 40 provided at the lower opening 1. As shown in Fig. 3, a circular outlet 40a for discharging an optical fiber 11 from the furnace body 1 is formed at a central portion of the shutter 40 and a plurality of, for example, eight circular holes 40b for discharging gas out of the furnace body 1 are formed at an outer peripheral portion of the shutter 40 so as to be located at an equal interval on a circle having the outlet 40a as its center. This shutter 40 is split into two shutter portions and the shutter portions can be opened and closed in right and left directions in Fig. 3.

In the fiber drawing furnace K1 of the above described arrangement, when a preform 10 is drawn into the optical fiber 11 while inert gas 12 is being introduced into the furnace body 1 from an upper portion of the furnace body 1, the inert gas 12 flows downwardly substantially along an axial direction of the optical fiber 11 so as to be discharged out of the furnace body 1 from the holes 40b. Thus, in the fiber drawing furnace K1, such an earlier mentioned undesirable phenomenon associated with the prior art fiber drawing furnaces does not take place that turbulent flow of the inert gas 12 is produced. Therefore, even if fine particles of silicon carbide (SiC) are produced in the vicinity of an inner periphery of the muffle 3 upon reaction between carbon (C) of the muffle 3 and silicon (Si) in the preform 10, the inert gas 12 containing these fine particles can be efficiently discharged out of the furnace body 1 from the holes 40b, so that adherence of the fine particles to the optical fiber 11 is minimized. It is to be noted that the shutter 40 of this embodiment of the present invention closes the lower opening 1b substantially and therefore, is fully capable of maintaining atmosphere of the inert gas 12 in the furnace body 1.

In one concrete example of the above described embodiment of the present invention, an inside diameter of the muffle 3 is set at about 40 mm, while the holes 40b of the shutter 40 have a diameter of 5 mm and are located on a circle of 15 mm in radius. When the optical fiber 11 produced in this example is subjected to screening of 700 g, an average fracture length of the optical fiber 11 increases to 150 km as compared with 50 km of a prior art arrangement in which an inside diameter of the muffle 3 is set at 40 mm in the same manner as in this example.

In this embodiment, the holes 40b formed in the shutter 40 are not restricted to the circular shape but may be modified variously on the condition that the holes 40b permit passage of gas. For example, the holes 40b may be replaced by slits. The holes 40b are provided at the outer peripheral portion of the shutter 40 such that silicon carbide (SiC), etc. produced in the vicinity of the inner periphery of the muffle 3 can be efficiently discharged out of the furnace body 1 from the holes 40b. In order to obtain uniform flow of gas, it is desirable that a number of the holes 40b having a small diameter are provided. Furthermore, if the holes 40b having an identical shape are provided on the circle having the center of the shutter 40 as its center as in the above embodiment, such an effect is achieved that flow of gas is made more uniform.

Fig. 4 shows a disklike shutter 41 employed in a fiber drawing furnace K2 according to a second embodiment of the present invention. Since other constructions of the fiber drawing furnace K2 are similar to those of the fiber drawing furnace K1, description thereof is abbreviated for the sake of brevity. A circular outlet 41a for the optical fiber 11 is formed at a central portion of the shutter 41 and an annular mesh 50 is provided in the shutter 40 coaxially with the outlet 41a. In the fiber drawing furnace K2, gas containing fine particles of silicon carbide (SiC), etc. can be efficiently discharged along the axial direction of the optical fiber 11 out of the furnace body 1 from the mesh 50 in the same manner as in the fiber drawing furnace K1.

Referring to Fig. 5, there is shown a fiber drawing furnace K3 according to a third embodiment of the present invention. In the fiber drawing furnace K3, a disklike shutter 42 is provided below a bottom face of the lower opening 1b of the furnace body 1 such that a gap 42b is defined between the bottom face of the lower opening 1b and an upper face of the shutter 42. Since other constructions of the fiber drawing furnace K3 are similar to those of the fiber drawing furnace K1, description thereof is abbreviated for the sake of brevity. Also in the fiber drawing furnace K3, gas containing fine particles of silicon carbide (SiC), etc. can be efficiently discharged along the axial direction of the optical fiber 11 out of the furnace body 1 from the gap 42b.

Referring finally to Fig. 6, there is shown a fiber drawing furnace K4 according to a fourth embodiment of the present invention. In the fiber drawing furnace K4, a disklike shutter 43 having an outside diameter smaller than an inside diameter of the lower opening 1b and formed, at its central portion, with an outlet 43a for the optical fiber 11 is provided in the lower opening 1b such that a gap 43b is defined between an inner peripheral surface of the lower opening 1b and an outer peripheral surface of the shutter 43. Since other constructions of the fiber drawing furnace K4 are similar to those of the fiber drawing furnace K1, description thereof is abbreviated for the sake of brevity. Also in the fiber drawing furnace K4, gas containing fine particles of silicon carbide (SiC), etc. can be efficiently discharged along the axial direction of the optical fiber 11 out of the furnace body 1 from the gap 43b.

As is clear from the foregoing, in the fiber drawing furnace of the present invention, fine particles of silicon carbide (SiC) produced in the vicinity of the inner periphery of the muffle, etc. flow along the inner periphery of the muffle so as to be discharged out of the furnace body from the holes of the shutter and turbulent flow of the inert gas associated with the prior art fiber drawing furnaces does not take place. Therefore, in accordance with the present invention, such an undesirable phenomenon can be eliminated that strength of the optical fiber is reduced through adherence of the fine particles to the optical fiber.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

**Claims**

1. In a fiber drawing furnace (K1-K4) in which a rodlike preform (10) is drawn into an optical fiber (11) while being softened through heating thereof in atmosphere of inert gas (12) introduced into a furnace body (1) from an upper portion of the furnace body (1) and the furnace body (1) has a lower opening (1b) such that a shutter (40-43) formed with an outlet (40a-43a) for the optical fiber (11) is provided at the lower opening (1b), wherein: an opening (40b, 50, 42b, 43b) for discharging gas out of the furnace body (1), is formed in the shutter (40-43).

2. A fiber drawing furnace (K1) as claimed in Claim 1, wherein the opening (40b, 50, 42b, 43b) is constituted by a plurality of holes (40b) located on a circle having the outlet (40a) as its center.

3. A fiber drawing furnace (K2) as claimed in Claim 1, wherein the opening (40b, 50, 42b, 43b) is constituted by a mesh (50) of annular shape having the outlet (41a) as its center.

4. A fiber drawing furnace (K3) as claimed in Claim 1, wherein the opening (40b, 50, 42b, 43b) is constituted by a first gap (42b) defined between a bottom face of the lower opening (1b) of the furnace body (1) and an upper face of the shutter (42).

5. A fiber drawing furnace (K4) as claimed in Claim 1, wherein the opening (40b, 50, 42b, 43b) is constituted by a second gap (43b) defined between an inner peripheral surface of the lower opening (1b) of the furnace body (1) and an outer peripheral surface of the shutter (43).

Fig. 1 PRIOR ART

Fig. 2

*Fig. 3*

*Fig. 4*

*Fig. 5*

*Fig. 6*